# EUROPÄISCHE PATENTSCHRIFT

(11) **EP 2 804 885 B1**
(45) Veröffentlichungstag und Bekanntmachung des Hinweises auf die Patenterteilung: **20.12.2017**
(21) Anmeldenummer: 13700312.5
(22) Anmeldetag: 16.01.2013
(51) Int. Cl.: C08G 18/28, C08G 69/18, C08G 69/20, C08L 77/02, C08L 75/04, C08J 5/24

(54) **ZUSAMMENSETZUNGEN UMFASSEND LACTAM**
COMPOUNDS COMPRISING LACTAM
COMPOSITIONS COMPRENANT DU LACTAME

(30) Priorität: 19.01.2012 EP 12151670
(43) Veröffentlichungstag der Anmeldung: 26.11.2014
(73) Patentinhaber: BASF SE, 67056 Ludwigshafen am Rhein (DE)
(72) Erfinder: DESBOIS, Philippe, 68535 Edingen-Neckarhausen (DE); WOLLNY, Andreas, 67251 Freinsheim (DE); RADTKE, Andreas, 68161 Mannheim (DE); MÜLLER, Anna Karina, 64295 Darmstadt (DE)
(74) Vertreter: Baier, Martin
(86) Internationale Anmeldenummer: PCT/EP2013/050732
(87) Internationale Veröffentlichungsnummer: WO 2013/107765

(56) Entgegenhaltungen:
- EP-A1- 0 134 992
- EP-A1- 0 459 199
- EP-A2- 0 232 695
- US-A- 3 714 110
- US-A- 4 414 362
- US-A- 4 742 128

## Beschreibung

Die Erfindung betrifft eine Zusammensetzung umfassend die Komponenten
(A) von 50 bis 99,5 Gew.-% mindestens eines Lactams
(B) von 0,1 bis 10 Gew.-% mindestens eines Katalysators
(C) von 0,1 bis 5 Gew.-% eines Aktivators aus der Gruppe der Isocyanate, Säureanhydride, Säurehalogenide, deren Umsetzungsprodukte mit (A) und deren Mischungen
(D) von 0,25 bis 45 Gew.-% mindestens eines nicht funktionalisierten statistischen Styrol-Butadien-Copolymers, das keine funktionellen Gruppen mit Heteroatomen umfasst, und
(E) von 0,05 bis 25 Gew.-% mindestens eines Hydroxy-terminierten Kautschuks,
wobei die Gew.-% Angaben auf die der Komponenten (A) bis (E) bezogen sind und diese Summe 100 Gew.-% beträgt.

Die Erfindung betrifft auch Verfahren zur Herstellung eines Formteils umfassend die Schritte
(a) das Herstellen getrennter Mischungen
   s1) enthaltend mindestens ein Lactam (A), von 0,1 bis 5 Gew.-% eines Aktivators (C) aus der Gruppe der Isocyanate, Säureanhydride, Säurehalogenide, deren Umsetzungsprodukte mit (A) und deren Mischungen, von 0,05 bis 25 Gew.-% mindestens eines Hydroxy-terminierten Kautschuks (E)
   s2) enthaltend mindestens ein Lactam (A) und von 0,1 bis 10 Gew.-% mindestens eines Katalysators (B) und von 0,25 bis 45 Gew.-% mindestens eines nicht funktionalisierten statistischen Styrol-Butadien-Copolymers (D), das keine funktionellen Gruppen mit Heteroatomen umfasst, wobei die Gesamtmenge an Komponente (A) in den Mischungen s1) und s2) 50 bis 99,5 Gew.-% beträgt und wobei die Gew.-% Angaben auf die der Komponenten (A) bis (E) bezogen sind und diese Summe 100 Gew.-% beträgt,
(b) Einspritzen der vereinigten Mischungen s1) und s2) in eine heiße Form mit eingelegter textiler Struktur
(c) Auswerfen des resultierenden Formteils aus der Form.

Die Erfindung betrifft auch Verfahren zur Herstellung eines Formteils umfassend die Schritte
(a) das Herstellen getrennter Mischungen
   s1) enthaltend mindestens ein Lactam (A), von 0,1 bis 5 Gew.-% eines Aktivators (C) aus der Gruppe der Isocyanate, Säureanhydride, Säurehalogenide, deren Umsetzungsprodukte mit (A) und deren Mischungen, von 0,05 bis 25 Gew.-% mindestens eines Hydroxy-terminierten Kautschuks (E) und mindestens ein nicht funktionalisiertes statistisches Styrol-Butadien-Copolymer (D), das keine funktionellen Gruppen mit Heteroatomen umfasst
   s2) enthaltend mindestens ein Lactam (A) und von 0,1 bis 10 Gew.-% mindestens eines Katalysators (B) und mindestens ein nicht funktionalisiertes statistisches Styrol-Butadien-Copolymer (D), das keine funktionellen Gruppen mit Heteroatomen umfasst, wobei die Gesamtmenge an Komponente (A) in den Mischungen s1) und s2) 50 bis 99,5 Gew.-% und die Gesamtmenge an Komponente (D) in den Mischungen s1) und s2) 0,25 bis 45 Gew.-% beträgt und wobei die Gew.-% Angaben auf die der Komponenten (A) bis (E) bezogen sind und diese Summe 100 Gew.-% beträgt,
(b) Einspritzen der vereinigten Mischungen s1) und s2) in eine heiße Form mit eingelegter textiler Struktur
(c) Auswerfen des resultierenden Formteils aus der Form.

Des Weiteren betrifft die vorliegende Erfindung Formteile, die durch das beschriebene Verfahren erhältlich sind.

Lactame, wie Caprolactam, können anionisch polymerisiert werden. Die Herstellung von Polyamid-Formkörpern ist dem Fachmann an sich bekannt.

Aus der DE 3 534 949 sind nicht funktionalisierte Polybutadiene als Additive zu Lactamschmelzen bekannt.

Die Schrift EP 243 177 beschreibt die Verwendung von Polybutadien mit OH-Endgruppen und Molmassen von 400-3000 g/mol in der aktivierten anionischen Polymerisation von Lactamen.

EP 0 459 199 A1 betrifft Lactammischungen mit erhöhter Viskosität in der Schmelze, die ungesättigte Vinylaromat-Dien-Blockcopolymere enthalten. Die Schmelzen können zur Herstellung von Polyamidformkörpern verwendet werden.

Es stellte sich die Aufgabe, eine Zusammensetzung umfassend mindestens ein Lactam bereitzustellen, die polymerisiert werden kann. Die Zusammensetzung sollte ermöglichen, direkt und ohne die vorherige und/oder separate Ausbildung von Präpolymeren zu Polyamid umsetzbar zu sein.

Die Zusammensetzung sollte nach der Polymerisation zu Formteilen führen, die eine homogene Morphologie aufweisen. Insbesondere sollten keine Komponenten der Zusammensetzung aus einem zu Polyamid polymerisierten Formteil heraus auf die Oberfläche des Formteils migrieren und so einen sogenannten Ausblutungseffekt aufweisen. Auch wenn der Zusammensetzung ein Additiv zugegeben werden musste, sollte darauf geachtet werden, dass die Viskositätszahlen des resultierenden Polyamids nicht signifikant von denen des reinen Polyamids abweicht, um Verarbeitbarkeit in bestehenden Geräten zu ermöglichen.

Formteile, die nach oben beschriebenen Verfahren aus der Zusammensetzung hergestellt werden, sollten leicht aus der Form, die zur Herstellung verwendet wird, auswerfbar sein. Die resultierenden Formteile sollten eine hohe Durchstoßbeständigkeit aufweisen.

Wie eingangs beschrieben, wird erfindungsgemäß mindestens ein Lactam als Komponente (A) eingesetzt. Als Lactam eignet sich insbesondere Caprolactam, Piperidon, Pyrrolidon oder Lauryllactam. Es können auch Mischungen unterschiedlicher Lactame verwendet werden. Bevorzugt werden Caprolactam, Lauryllactam oder deren Mischungen verwendet. Besonders bevorzugt wird als Komponente (A) Caprolactam oder Lauryllactam eingesetzt.

In einer Ausführungsform ist es möglich, anstelle eines Lactams als Komponente (A) eine Mischung aus Lactam und Lacton einzusetzen. Als Lactone können beispielsweise Caprolacton oder Butyrolacton eingesetzt werden.

Sofern ein Lacton als Comonomer mitverwendet wird, wird es typischer Weise in Mengen von 0,01 bis 40 Gew.-% bezogen auf das Gesamtmonomer verwendet. Bevorzugt beträgt der Anteil an Lacton als Comonomer von 0,01 bis 30 Gew.-%, besonders bevorzugt von 0,01 bis 20 Gew.-%, bezogen auf das Gesamtmonomer.

In einer bevorzugten Ausführungsform der Erfindung werden ausschließlich Lactame als Komponente (A) verwendet.

Die erfindungsgemäße Zusammensetzung umfasst einen Katalysator (B). Unter einem Katalysator für die anionische Polymerisation wird im Rahmen der vorliegenden Erfindung eine Verbindung verstanden, welche die Bildung von Lactam-Anionen ermöglicht. Die Lactam-Anionen an sich können ebenfalls als Katalysator fungieren.

Derartige Katalysatoren sind beispielsweise aus Polyamide, Kunststoffhandbuch, 1998, Karl Hanser Verlag bekannt. Im Rahmen der vorliegenden Erfindung wird bevorzugt ein Katalysator (B) eingesetzt, der ausgewählt ist aus der Gruppe bestehend aus Alkalicaprolactamaten wie Natriumcaprolactamat, Kaliumcaprolactamat, Erdalkalicaprolactamate wie Bromid-Magnesiumcaprolactamat, ChloridMagnesiumcaprolactamat, Magnesium-bis-Caprolactamat, Alkalimetallen wie Natrium oder Kalium, Alkalibasen, z.B. Natriumbasen wie Natriumhydrid, Natrium, Natriumhydroxid, Natriummethanolat, Natriumethanolat, Natriumpropanolat, Natriumbutanolat, z.B. Kaliumbasen wie Kaliumhydrid, Kalium, Kaliumhydroxid, Kaliummethanolat, Kaliumethanolat, Kaliumpropanolat, Kaliumbutanolat und deren Mischungen, bevorzugt bestehend aus Natriumcaprolactamat, Kaliumcaprolactamat, Bromid-Magnesiumcaprolactamat, Chloridmagnesiumcaprolactamat, Magnesiumbiscaprolactamat, Natriumhydrid, Natrium, Natriumhydroxid, Natriumethanolat, Natriummethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

Besonders bevorzugt wird ein Katalysator (B) eingesetzt ausgewählt aus der Gruppe bestehend aus Natriumhydrid, Natrium und Natriumcaprolactamat und deren Mischungen; besonders bevorzugt ist Natriumcaprolactamat. Der Katalysator kann als Feststoff oder in Lösung eingesetzt werden. Der Katalysator wird bevorzugt als Feststoff eingesetzt. Der Katalysator wird bevorzugt in eine Caprolactam-Schmelze gegeben, in der er gelöst werden kann. Diese Katalysatoren bewirken eine besonders schnelle Reaktion und erhöhen somit die Effizienz des Herstellungsverfahrens der erfindungsgemäßen Zusammensetzung.

Das Molverhältnis von Lactam (A) zu Katalysator (B) kann in weiten Grenzen variiert werden, es beträgt in der Regel von 1 zu 1 bis 10000 zu 1, bevorzugt von 5 zu 1 bis 1000 zu 1, besonders bevorzugt von 5 zu 1 bis 500 zu 1.

Als Aktivator (C) für die anionische Polymerisation wird eine Verbindung ausgewählt aus der Gruppe der durch elektrophile Reste N-substituierten Lactame, der aliphatischen Diisocyanate, der aromatischen Diisocyanate, der Polyisocyanate mit mehr als zwei Isocyanat Gruppen, der aliphatischen Disäurehalogenide und aromatischen Disäurehalogenide. Es können auch Mischungen davon als Aktivator (C) eingesetzt werden.

Zu den durch elektrophile Reste N-substituierten Lactamen gehören zum Beispiel Acyllactame. Als Aktivator (C) können auch Vorstufen für solche aktivierten N-substituierten Lactame verstanden werden, welche zusammen mit dem Lactam (A) in situ ein aktiviertes, Lactam bilden.

Aktivatoren, die Isocyanat-Reste aufweisen, sind besonders geeignet, da sie eine schnellere Reaktion bewirken als Aktivatoren auf der Basis von Säurehalogeniden.

Zu den aliphatischen Diisocyanaten als Aktivator (C) eignen sich Verbindungen wie Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis (cyclohexylisocyanat), Isophorondiisocyanat. Als aromatische Diisocyanate eignen sich unter anderem Toluyldiisocyanat, 4,4'-Methylenbis(phenyl)isocyanat oder Polyisocyanate mit mehr als zwei Isocyanatgruppen wie Basonat HI 100 der BASF SE, Allophanate (zum Beispiel Ethylallophanat). Insbesondere können Mischungen der genannten Verbindung als Aktivator (C) eingesetzt werden.

Als aliphatische Disäurehalogenide eignen sich Verbindungen wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis (cyclohexylsäurechlorid), 4,4'-Methylenbis (cyclohexylsäurebromid), Isophorondisäurechlorid, Isophorondisäurebromid. Als aromatische Disäurehalogenide eignen sich unter anderem Toluymethylenldisäurechlorid, Toluylmethylendisäurechlorid, 4,4'-Methylenbis(phenyl)säurechlorid oder 4,4'-Methylenbis(phenyl)säurebromid. Insbesondere können Mischungen der genannten Verbindung als Aktivator (C) eingesetzt werden. In einer bevorzugten Ausführungsform wird als Aktivator (C) mindestens eine Verbindung eingesetzt, die ausgewählt ist aus der Gruppe enthaltend Hexamethylendiisocyanat, Isophorondiisocyanat, Hexamethylendisäurebromid, Hexamethylendisäurechlorid oder deren Mischungen; besonders bevorzugt wird Hexamethylendiisocyanat eingesetzt. Der Aktivator (C) kann in fester Form oder als Msichung eingesetzt werden. Insbesondere kann der Aktivator in Caprolactam gelöst werden. Geeignet als Aktivator (C) ist beispielsweise Brüggolen® C20, 80% Caprolactam-blockiertes 1,6-Hexamethylendiisocyanat in Caprolactam der Firma Brüggemann, DE.

Die Menge an Aktivator (C) definiert die Anzahl der wachsenden Ketten, da jedes Aktivatormolekül das Anfangsglied einer Polymerkette darstellt. Das Molverhältnis von Lactam (A) zu Aktivator (C) kann in weiten Grenzen variiert werden und beträgt in der Regel von 1 zu 1 bis 10000 zu 1, bevorzugt von 5 zu 1 bis 2000 zu 1, besonders bevorzugt 20 zu 1 bis 1000 zu 1.

Als Komponente (D) eignen sich kohlenwasserstoffbasierte nicht funktionalisierte Kautschuke. Der Begriff Kautschuk wird nach DIN 53 501 verwendet und bezieht sich auf unvernetzte Polymere, die vernetzbar sind und bei Raumtemperatur gummielastische Eigenschaften aufweisen. Der Begriff "nicht funktionalisierter Kautschuk" bezieht sich auf Kautschuke, die keine funktionellen Gruppen mit Heteroatomen umfassen. Unter "Heteroatomen" werden im Sinne der vorliegenden Erfindung insbesondere Sauerstoff (O), Stickstoff (N), Schwefel (S) und Phosphor (P) verstanden.

Die Gegenwart eines nicht funktionalisierten Kautschuks (D) führt aufgrund fehlender funktioneller Gruppen zu einer besonders homogenen Morphologie, die sich von Morphologien unterscheidet, die mit herkömmlichen funktionalisierten Kautschuken erhalten werden. Die nach der vorliegenden Erfindung erhaltene Morphologie wirkt sich durch ihre Homogenität in vorteilhafter Weise auf die mechanischen Eigenschaften der Zusammensetzung, insbesondere auf die mechanischen Eigenschaften der aus der erfindungsgemäßen Zusammensetzung erhältlichen Formteile aus.

Insbesondere eigenen sich nicht funktionalisierte Kautschuke mit einer Molmasse Mw von 500 bis 300.000 g/mol, insbesondere 1.000 bis 150.000 g/mol, bestimmt aus GPC mit Lichtstreuung in Hexafluorisopropanol (HFIP) bei 40°C.

Es eigenen sich nicht funktionalisierte Kautschuke mit einem Tg-Wert von -150°C bis 25 °C bestimmt unter Stickstoff-Schutzgas durch Differential Scanning Calorimetry (DSC) mit einer Starttemperatur von -180 °C, einer Endtemperatur von 200 °C und einer Heizrate von 20 [K/min].

Im Rahmen der vorliegenden Erfindung werden nicht funktionalisierte statistische Styrol-butadien-Copolymere, die keine funktionellen Gruppen mit Heteroatomen umfassen, verwendet. Derartige nicht funktionalisierte Kautschuke können z.B. nach EP-A 0859803 durch anionische Polymerisation z.B. mittels Lithiumalkyl in einem nicht polaren Lösungsmittel hergestellt werden, wobei die Polymerisation mindestens einer Weichphase in Gegenwart z.B. eines löslichen Kaliumsalzes vorgenommen wird.

Als Hydroxy-terminierter Kautschuk (E) eignen sich Hydroxy-terminierte kohlenwasserstoffbasierte Kautschuke. Der Begiff "Hydroxy-terminierter Kautschuk" bezieht sich auf Kautschuke, die an jeweiligen Kettenenden Hydroxy-Gruppen tragen.

Der Hydroxy-terminierte Kautschuk (E) trägt ebenfalls zu einer Homogeniserung der Morphologie der Zusammensetzung bei, die sich ähnlich wie im Fall des nicht funktionalisierten Kautschuks (D) positiv auf die mechanischen Eigenschaften der erfindungsgemäßen Zusammensetzung, bzw. auf die mechanischen Eigenschaften der erhältlichen Formteile auswirkt.

Insbesondere eigenen sich Hydroxy-terminierte kohlenwasserstoffbasierte Kautschuke mit einer Molmasse Mw von 500 bis 60.000 g/mol, insbesondere 1.000 bis 50000 g/mol, bevorzugt von 1.000 bis 30.000 g/mol, zum Beispiel von 1.000 bis 15.000 g/mol, bestimmt aus GPC mit Lichtstreuung in Hexafluorisopropanol (HFIP) bei 40°C.

Es eigenen sich kohlenwasserstoffbasierte Kautschuke mit einem Tg-Wert von -150°C bis 25 °C bestimmt unter Stickstoff-Schutzgas durch Differential Scanning Calorimetry (DSC) mit einer Starttemperatur von -180 °C, einer Endtemperatur von 200 °C und einer Heizrate von 20 [K/min].

Als Hydroxy-terminierter Kautschuk (E) können Hydroxy-terminierte Kautschuke wie synthetischer Hydroxy-terminierter Polyisopren Kautschuk, Hydroxy-terminierter Polybutadien Kautschuk, Hydroxy-terminierter Polyisobutylen-polybuten-butyl Kautschuk, Hydroxy-terminierte Ethylen-propylen-copolymere Kautschuke, Hydroxy-terminierte Ethylen-1-butene-copolymere Kautschuke, Hydroxy-terminierte Ethylen-propylen-1-buten-copolymer Kautschuke, Hydroxy-terminierte Ethylen-1-hexencopolymer Kautschuke, Hydroxy-terminierte Ethylen-1-octen-copolymer Kautschuke, Hydroxy-terminierte Ethylen-styrol-copolymer Kautschuke, Hydroxy-terminierte Ethylen-norbornen-copolymer Kautschuke, Hydroxy-terminierte Propylen-1-butencopolymer Kautschuke, Hydroxy-terminiertes Ethylen-1-buten-nicht-konjugiertes Dien Copolymer Kautschuke und Mischungen daraus verwendet werden. Derartige Hydroxy-terminierte Kautschuke (E) können wie in US 4 448 956, S. 2, Zeile 5-64, beschrieben hergestellt werden.

Auch können Hydroxy-terminierte Styrol Kautschuke, Hydroxy-terminierte Styrolbutadien-diblock Copolymere, wie Hydroxy-terminierte Styrol-butadien-styrol Triblockcopolymere, Hydroxy-terminierte Styrol-isoprene-diblock Copolymere, Hydroxy-terminierte Styrol-isopren-styrol-triblock Copolymere, Hydroxy-terminierte hydrierte Styrol-butadien-diblock Copolymere, Hydroxy-terminierte hydrierte Styrol-butadien-styrol Triblock Copolymere, Hydroxy-terminierte hydrierte Styrol-isoprene Diblock Copolymere, Hydroxy-terminierte Styrol-isopren-Styrol Triblock Copolymere und Mischungen daraus verwendet werden. Derartige Hydroxy-terminierte Kautschuke (E) können wie in US 4 448 956, S. 2, Zeile 5-64, beschrieben hergestellt werden.

Auch können Hydroxy-terminierte statistische Styrol-butadien-Copolymere, Hydroxy-terminierte statistische Styrol-isoprene Copolymere, Hydroxy-terminierte statistische hydrierte Styrol-butadien Copolymere, Hydroxy-terminierte statistische hydrierte Styrol-isoprene Copolymere und Mischungen daraus verwendet werden. Derartige Hydroxy-terminierte Kautschuke (E) können wie in US 4 448 956, S. 2, Zeile 5-64, beschrieben hergestellt werden.

Als Komponente (E) können auch Hydroxy-terminierte Polyalkylacrylate wie Hydroxy-terminiertes Poly(n-Butyl)acrylate sowie Hydroxy-terminierte Copolymere aus n-Butylacrylat und Ethylen oder Methylmethacrylat und Mischungen daraus verwendet werden.

Derartige Hydroxy-terminierte Kautschuke (E) können wie in US 4 448 956, S. 2, Zeile 5-64, beschrieben hergestellt werden.

Es können auch Mischungen der Komponente (E) verwendet werden.

Das Stoffmengen-Verhältnis von Komponente (D) zu Komponente (E) beträgt bevorzugt von 1 zu 10 bis 10 zu 1. In einer bevorzugten Ausführungsform beträgt das Stoffmengen-Verhältnis von Komponente (D) zu Komponente (E) von 1 zu 3 bis 3 zu 1.

Neben den Komponenten (A) bis (E) kann die Zusammensetzung noch weitere Zusatzstoffe (F) enthalten. Die weiteren Zusatzstoffe werden zur Einstellung der Eigenschaften des aus der Zusammensetzung herstellbaren Polyamids zugegeben. Übliche Zusatzstoffe sind zum Beispiel Farbstoffe, Entformungsmittel, Viskositätsverbesserer oder Flammschutzmittel.

Die erfindungsgemäße Zusammensetzung umfasst die Komponenten
(A) von 50 bis 99,5 Gew.-% mindestens eines Lactams
(B) von 0,1 bis 10 Gew.-% mindestens eines Katalysators
(C) von 0,1 bis 5 Gew.-% eines Aktivators aus der Gruppe der Isocyanate, Säureanhydride, Säurehalogenide, deren Umsetzungsprodukte mit (A) und deren Mischungen
(D) von 0,25 bis 45 Gew.-% mindestens eines nicht funktionalisierten statistischen Styrol-Butadien-Copolymers, das keine funktionellen Gruppen mit Heteroatomen umfasst, und
(E) von 0,05 bis 25 Gew.-% mindestens eines Hydroxy-terminierten Kautschuks, wobei die Gew.-% Angaben auf die der Komponenten (A) bis (E) bezogen sind und diese Summe 100 Gew.-% beträgt.

In einer weiteren Ausführungsform der Erfindung kann die Zusammensetzung, die die Komponenten A) bis E) umfassen kann und gegebenenfalls F) auf eine zur Polymerisation des Lactams geeignete Temperatur erwärmt werden. Erwärmung der Zusammensetzung auf eine zur Polymerisation des Lactams geeignete Temperatur führt in der Regel zu einem Duroplast. Insbesondere kann die Zusammensetzung umfassend die Komponenten A) bis E) und gegebenenfalls F) auf eine Temperatur im Bereich von 40 bis 240°C bevorzugt 100 bis 170°C erwärmt werden, wobei eine polymere feste Phase gebildet wird. Ausdrücklich kann die Zusammensetzung auch ohne textile Struktur erwärmt werden.

In einer Variante des Verfahrens können die Komponenten (A), (D) und (E) bei einer Temperatur im Bereich von 40 bis 240°C gelöst werden, anschließend (C) hinzugefügt werden, wobei ein Präpolymer gebildet wird, das in Folge bei einer Temperatur im Bereich von 10 bis 120 °C mit der Komponente (B) unter Erhalt einer polymeren festen Phase umgesetzt wird.

Die Erfindung betrifft auch Verfahren zur Herstellung eines Formteils umfassend die Schritte
(a) das Herstellen getrennter Mischungen
   s1) enthaltend mindestens ein Lactam (A), von 0,1 bis 5 Gew.-% eines Aktivators (C) aus der Gruppe der Isocyanate, Säureanhydride, Säurehalogenide, deren Umsetzungsprodukte mit (A) und deren Mischungen, von 0,05 bis 25 Gew.-% mindestens eines Hydroxy-terminierten Kautschuks (E)
   s2) enthaltend mindestens ein Lactam (A) und von 0,1 bis 10 Gew.-% mindestens eines Katalysators (B) und von 0,25 bis 45 Gew.-% mindestens eines nicht funktionalisierten statistischen Styrol-Butadien-Copolymers (D), das keine funktionellen Gruppen mit Heteroatomen umfasst, wobei die Gesamtmenge an Komponente (A) in den Mischungen s1) und s2) 50 bis 99,5 Gew.-% beträgt und wobei die Gew.-% Angaben auf die der Komponenten (A) bis (E) bezogen sind und diese Summe 100 Gew.-% beträgt,
(b) Einspritzen der vereinigten Mischungen s1) und s2) in eine heiße Form mit eingelegter textiler Struktur
(c) Auswerfen des resultierenden Formteils aus der Form.

Die Erfindung betrifft auch Verfahren zur Herstellung eines Formteils umfassend die Schritte
(a) das Herstellen getrennter Mischungen
   s1) enthaltend mindestens ein Lactam (A), von 0,1 bis 5 Gew.-% eines Aktivators (C) aus der Gruppe der Isocyanate, Säureanhydride, Säurehalogenide, deren Umsetzungsprodukte mit (A) und deren Mischungen, von 0,05 bis 25 Gew.-% mindestens eines Hydroxy-terminierten Kautschuks (E) und mindestens ein nicht funktionalisiertes statistisches Styrol-Butadien-Copolymer (D), das keine funktionellen Gruppen mit Heteroatomen umfasst
   s2) enthaltend mindestens ein Lactam (A) und von 0,1 bis 10 Gew.-% mindestens eines Katalysators (B) und mindestens ein nicht funktionalisiertes statistisches Styrol-Butadien-Copolymer (D), das keine funktionellen Gruppen mit Heteroatomen umfasst, wobei die Gesamtmenge an Komponente (A) in den Mischungen s1) und s2) 50 bis 99,5 Gew.-% und die Gesamtmenge an Komponente (D) in den Mischungen s1) und s2) 0,25 bis 45 Gew.-% beträgt und wobei die Gew.-% Angaben auf die der Komponenten (A) bis (E) bezogen sind und diese Summe 100 Gew.-% beträgt,
(b) Einspritzen der vereinigten Mischungen s1) und s2) in eine heiße Form mit eingelegter textiler Struktur
(c) Auswerfen des resultierenden Formteils aus der Form.

Mischvorgänge können in einem statischen oder dynamischen Mischer durchgeführt werden.

Die erfindungsgemäße Zusammensetzung zeichnet sich dadurch aus, dass die Art der Formen, in denen sie eingesetzt werden kann, nicht beschränkt ist. Insbesondere Formen zur Herstellung dünnwandiger Formkörper, in denen die Schmelzen lange Fließstrecken zurücklegen müssen sind mittels des beschriebenen Verfahrens besonders gut herstellbar.

Eventuell können beim Vermischen der Schmelzen weitere Zusätze wie Entformungsmittel oder Viskositätsverbesserer zugefügt werden.

Die Verweilzeit des Formteils in der Form hängt von den Gegebenheiten des Einzelfalls ab, zum Beispiel der Spritztemperatur und der Komplexität des Formteils. Typische Verweilzeiten können im Sekunden- bis zweistelligen Minutenbereich liegen. Zum Beispiel können Verweilzeiten im Bereich von 30 sec bis 10 min liegen. Nach der Verweilzeit wird das Formteil aus der Form ausgeworfen.

Die Temperatur der Form hängt von den Gegebenheiten des Einzelfalls ab, insbesondere von den eingesetzten Komponenten und der Komplexität des Formteils. Unter einer heißen Form wird üblicher Weise eine Form mit einer Temperatur von 90 bis 250 °C insbesondere von 100 bis 200 °C verstanden.

Eine textile Struktur im Sinne der Erfindung ist eine Verknüpfung von Fasern oder Faserbündeln sein. Sie kann ein- oder mehrlagig sein. Sie kann zum Beispiel ein Gewebe, Gewirke, Geflechte, Gestricke, Gelege oder Vlies sein. Als textile Struktur im Rahmen der vorliegenden Erfindung werden Gewebe aus mindestens einer Lage, bevorzugt mehr als einer Lage, ein- oder mehrlagige Gestricke, ein- oder mehrlagige Gewirke, ein- oder mehrlagige Geflechte, Gelege, mindestens eine Lage, bevorzugt mehrere Lagen, aus parallel ausgerichteten Fasern, Faserbündeln, Garnen, Zwirnen oder Seilen, wobei die einzelnen Lagen der parallel ausgerichteten Fasern oder Faserbündeln von Garnen, Zwirnen oder Seilen zueinander gedreht sein können, oder Vliese verstanden. Bevorzugt liegen die textilen Strukturen als Gewebe oder in Form von Lagen parallel ausgerichteter Fasern oder Faserbündeln wie Garne, Zwirne oder Seile vor.

Wenn bei Gelegen die Lagen parallel ausgerichteter Fasern oder Faserbündeln wie Garne, Zwirne oder Seile gedreht zueinander eingesetzt werden, sind die einzelnen Lagen besonders bevorzugt jeweils um einen Winkel von 90° zueinander gedreht (bidirektionaler Aufbau). Bei Einsatz von drei Lagen oder eines Vielfachen von drei Lagen ist es auch möglich, die einzelnen Lagen um einen Winkel von 60° zueinander gedreht anzuordnen und bei vier Lagen oder Vielfachen von vier Lagen um einen Winkel von 45° zueinander gedreht. Weiterhin ist es auch möglich, mehr als eine Lage an Fasern oder Faserbündeln mit gleicher Ausrichtung vorzusehen. Hierbei können ebenfalls Lagen zueinander verdreht sein, wobei die Anzahl an Lagen mit Fasern oder Faserbündeln gleicher Ausrichtung in jeder der Ausrichtungen der Fasern oder Faserbündeln unterschiedlich sein kann, beispielsweise vier Lagen in einer ersten Richtung und eine Lage in einer dazu zum Beispiel um 90° gedrehten Richtung (bidirektionaler Aufbau mit Vorzugsrichtung). Weiterhin ist auch ein quasiisotroper Aufbau bekannt, bei dem die Fasern einer zweiten Lage um 90° gedreht zu Fasern oder Faserbündeln einer ersten Lage angeordnet sind und weiterhin Fasern oder Faserbündeln einer dritten Lage um 45° gedreht zu den Fasern oder Faserbündeln der zweiten Lage.

Besonders bevorzugt zur Herstellung der faserverstärkten Formteile werden textile Strukturen in von 2 bis 10 Lagen, insbesondere in von 2 bis 6 Lagen eingesetzt.

Die eingesetzten textilen Strukturen enthalten als Fasern vorzugsweise solche aus anorganischen Mineralien wie Kohlenstoff, beispielsweise als Niedermodulcarbonfasern oder Hochmodulcarbonfasern, silikatische oder nicht silikatische Gläser der verschiedensten Art, Bor, Siliciumcarbid, Kaliumtitanat, Metalle, Metalllegierungen, Metalloxide, Metallnitride, Metallcarbide oder Silikate, sowie organische Materialien wie natürliche und synthetische Polymere, beispielsweise Polyacrylnitrile, Polyester, ultrahochgereckte Polyolefinfasern, Polyamide, Polyimide, Aramide, Flüssigkristallpolymere, Polyphenylensulfide, Polyetherketone, Polyetheretherketone, Polyetherimide, Baumwolle, Cellulose oder andere Naturfasern, beispielsweise Flachs, Sisal, Kenaf, Hanf oder Abaca. Bevorzugt sind hochschmelzende Materialien, beispielsweise Gläser, Kohlenstoff, Aramide, Kaliumtitanat, Flüssigkristallpolymere, Polyphenylensulfide, Polyetherketone, Polyetheretherketone und Polyetherimide, besonders bevorzugt sind Glas-, Kohlenstoff-, Aramid-, Stahl-, Kaliumtitanat-, Keramik- und/oder sonstige hinreichend temperaturbeständige polymere Fasern oder Fäden.

Selbstverständlich können die textilen Strukturen auch aus Fasern unterschiedlichen Materials aufgebaut sein.

Die Erfindung bezieht sich auch auf die Formteile, die aus dem oben beschrieben Verfahren resultieren. Diese Formteile zeichnen sich auf Grund der Zusammensetzung dadurch aus, dass sie am Ende des Herstellverfahrens in mindestens 90% der Fälle leicht aus der Form ausgeworfen werden können. Zeitgleich weisen sich die Formteile dadurch aus, dass
zum Durchstoßen des Formteils nach Durchstoßtest ISO6603 eine Durchstoßarbeit von 50 bis 65 J nötig ist, gemessen an einem quadratischen Formteil von 60 mm mal 60 mm Abmessung, bei einer Temperatur von 23°C und einer Luftfeuchte von 50% mit einem Fallgewicht, dessen Auftreffgeschwindigkeit 4,2 m/s betrug und dessen Masse 43 kg betrug, wobei das Formteil zuvor für 7 Tage bei 80°C in einem Vakuumtrockenschrank getrocknet wurde.

### Beispiele

Die Erfindung wird anhand von nachstehenden Beispielen näher erläutert, ohne sie darauf einzuschränken.

### Viskositätszahl (VZ):

Die ermittelten Werte geben ein relatives Maß für die Molmasse von Polyamid. Dazu wurde eine 0,5%-ige Lösung des Polymers in 96%iger Schwefelsäure bei Raumtemperatur hergestellt. Sofern die zu untersuchende Probe Glasfasern enthielt, wurden diese vor der Viskositätsmessung mit einer Filternutsche aus Duran (Typ D 2) abfiltriert. Die resultierende Lösung wurde anschließend in ein Ubbelohde Kapillarviskosimeter der Firma Schott (Typ IIa) gegeben und in einem Durchsichtthermostat der Firma Schott auf 25,0°C temperiert. Sodann wurden die Durchflusszeiten der Probelösung und des Lösungsmittels bestimmt und daraus die VZ berechnet.

### Durchstoßtest (DST):

Ein Maß für die Zähigkeit ist die Durchstoßarbeit, welche nach der ISO6603 mit dem Durchstoßtest ermittelt wurde. Diese Messungen wurden an einem Prüfgerät "Fractovis" des Herstellers CEAST durchgeführt. Dazu wurden vor der Messung aus den hergestellten Formteilen quadratische Prüfkörper von 60 mm x 60 mm Abmessung ausgeschnitten und diese für 7 Tage bei 80°C in einem Vakuumtrockenschrank getrocknet. Der Durchstoßtest fand bei einer Temperatur von 23°C und einer Luftfeuchte von 50% statt. Die Auftreffgeschwindigkeit des Fallgewichts betrug 4,2 m/s und die Masse des Fallgewichts 43 kg. Die Auftreffenergie betrug 380 J und der Kraftsensor 22 kN.

Hydroxy-terminiertes Polybutadien (PBuOH): flüssiges Hydroxy-terminiertes Polybutadien mit einer Molmasse von Mn = 2800 g/mol, bestimmt aus GPC mit Lichtstreuung in Hexafluorisopropanol (HFIP) bei 40°C und einem Polymerisationsgrad von ca. 50. Die Hydroxylfunktionalität beträgt 2,5.

Nicht funktionalisiertes Polybutadien (PBu): flüssiges Polybutadien mit einer Molmasse von Mw = 8.000 g/mol, bestimmt aus GPC mit Lichtstreuung in Hexafluorisopropanol (HFIP) bei 40°C.

Styrolbutadien-Copolymer: statistisches Styrolbutadien-Copolymer (65 Gew.-% Styrol, 35 Gew.-% Butadien mit einer Molmasse von Mn = 135 000 g/mol, bestimmt aus GPC mit Lichtstreuung in Hexafluorisopropanol (HFIP) bei 40°C

### Verarbeitungsverfahren:

### 1. Anionische Polymerisationen im Kalorimeter (ohne Fasern):

Alle Polymerisationsreaktionen wurden bei 140°C unter Rühren in trockener Stickstoffatmosphäre in einem 50 ml Glaskalorimeterreaktor, der mit einem fettfreien Teflonstopfen verschlossen und mit einem Thermoelement versehen war, durchgeführt. Die Ergebnisse sind in Tabelle 1 aufgeführt. Die folgenden Beispiele erläutern die Versuchsdurchführung im Detail.

**Tabelle 1:**

| Beispiel | Vergl . 1 | Vergl . 2 | Vergl. 3 | Vergl. 4 | 1 | 2 | 3 | Vergl . 5 | Vergl. 6 | Vergl. 7 |
|---|---|---|---|---|---|---|---|---|---|---|
| Lactam (Gew.-%) | 94 | 88 | 82 | 69 | 89 | 84 | 87 | 89 | 84 | 74 |
| PBu (Gew.-%) | - | - | - | - | 4 | 8 | 16 | 5 | 10 | 20 |
| PBu OH (Gew.-%) | - | 5 | 10 | 20 | 1 | 2 | 4 | - | - | - |
| Katalysator C10 (Gew.-%) | 4 | 4 | 4 | 4 | 4 | 4 | 4 | 4 | 4 | 4 |
| Aktivator C20 (Gew.-%) | 2 | 3 | 4 | 7 | 2 | 2 | 2 | 2 | 2 | 2 |
| Stoffmenge PBu (mmol) | - | - | - | - | 0,05 | 0,1 | 0,2 | 0,06 3 | 0,125 | 0,25 |
| Stoffmenge PBudiOH (mmol) | - | 0,17 9 | 0,357 | 0,714 | 0,036 | 0,071 | 0,143 | - | - | - |
| Verhältnis PBu/PBudi OH | - | - | - | - | 1,39 | 1,41 | 1,40 | - | - | - |

Vergleichsbeispiele 2, 3, 4 analog zu EP 243 177
Vergleichsbeispiele 5, 6, 7 analog zu DE 3 534 949

### Vergleichsbeispiel 1:

9,40 g Caprolactam und 0,200 g des Aktivators Brüggolen C20 (80% Caprolactam-blockiertes 1,6-Hexamethylendiisocyanat in Caprolactam, Brüggemann KG, Heilbronn) wurden in dem Reaktor bei 140°C gelöst. Anschließend wurden 0,400 g des Katalysators Brüggolen C10 (18% Natriumcaprolactam in Caprolactam, Brüggemann KG, Heilbronn) als Feststoff bei 20 °C in die schmelzflüssige Mischung zugegeben Anschließend wurde die anionische Polymerisation durch Abkühlen des Reaktors in Wasser (10°C) gestoppt.

### Vergleichsbeispiel 2:

8,80 g Caprolactam und 0,500 g Hydroxy-terminiertes Polybutadien wurden in dem Reaktor bei 140°C gelöst. Anschließend wurden 0,30 g des Aktivators Brüggolen C20 (80% Caprolactam-blockiertes 1,6-Hexamethylendiisocyanat in Caprolactam, Brüggemann KG, Heilbronn) als Feststoff bei RT in die schmelzflüssige Mischung zugegeben. Die Mischung wurde für 15 min bei 140°C gerührt, dabei bildete sich insitu das Präpolymer. Ohne diese Präpolymer zu isolieren, wurden daraufhin 0,40 g des Katalysators Brüggolen C10 (18% Natriumcaprolactamat in Caprolactam, Brüggemann KG, Heilbronn) als Feststoff bei RT in die schmelzflüssige Mischung zugefügt. Anschließend wurde die anionische Polymerisation durch Abkühlen des Reaktors in Wasser (10°C) gestoppt.

### Vergleichsbeispiel 3:

Beispiel 2 wurde wiederholt mit dem Unterschied, dass 1,000 g Hydroxy-terminiertes Polybutadien und 0,40 g des Aktivators Brüggolen C20 eingesetzt wurden.

### Vergleichsbeispiel 4:

Beispiel 2 wurde wiederholt mit dem Unterschied, dass 2,000 g Hydroxy-terminiertes Polybutadien und 0,70 g des Aktivators Brüggolen C20 eingesetzt wurden.

### Beispiel 1:

8,90 g Caprolactam, 0,400 g nicht-funktionalisiertes Polybutadien und 0,10 g Hydroxy-terminiertes Polybutadien wurden in dem Reaktor bei 140°C gelöst. Anschließend wurden 0,20 g des Aktivators Brüggolen C20 (80% Caprolactam-blockiertes 1,6-Hexamethylendiisocyanat in Caprolactam, Brüggemann KG, Heilbronn) als Feststoff bei 20 °C in die schmelzflüssige Mischung zugegeben. Die Mischung wurde für 30 min bei 140°C gerührt, dabei bildete sich das Präpolymer. Ohne dieses Präpolymer zu isolieren, wurden daraufhin 0,40 g des Katalysators Brüggolen C10 (18% Natriumcaprolactamat in Caprolactam, Brüggemann KG, Heilbronn) als Feststoff bei 20 °C in die schmelzflüssige Mischung zugefügt. Anschließend wurde die anionische Polymerisation durch Abkühlen des Reaktors in Wasser (10°C) gestoppt.

### Beispiele 2:

Beispiel 1 wurde wiederholt mit dem Unterschied, dass 0,80 g nicht funktionalisiertes Polybutadien und 0,20 g Hydroxy-terminiertes Polybutadien eingesetzt wurden.

### Beispiele 3:

Beispiel 1 wurde wiederholt mit dem Unterschied, 1,60 g nicht funktionalisiertes Polybutadien und 0,40 g OH-terminiertes Polybutadien eingesetzt wurden.

### Vergleichsbeispiel 5:

8,90 g Caprolactam und 0,50 g nicht funktionalisiertes Polybutadien wurden in dem Reaktor bei 140°C gelöst. Anschließend wurden 0,20 g des Aktivators Brüggolen C20 (80% Caprolactam-blockiertes 1,6-Hexamethylendiisocyanat in Caprolactam, Brüggemann KG, Heilbronn) als Feststoff bei RT in die schmelzflüssige Mischung zugegeben. Die Mischung wurde für 15 min bei 140°C gerührt. Daraufhin wurden 0,40 g des Katalysators Brüggolen C10 (18% Natriumcaprolactamat in Caprolactam, Brüggemann KG, Heilbronn) als Feststoff bei 20 °C in die schmelzflüssige Mischung zugegeben Anschließend wurde die anionische Polymerisation durch Abkühlen des Reaktors in Wasser (10°C) gestoppt.

### Vergleichsbeispiel 6:

Vergleichsbeispiel 5 wurde wiederholt mit dem Unterschied, dass 1,00 g nicht funktionalisiertes Polybutadien eingesetzt wurde.

### Vergleichsbeispiel 7:

Vergleichsbeispiel 5 wurde wiederholt mit dem Unterschied, dass 2,00 g nicht funktionalisiertes Polybutadien eingesetzt wurde.

### 2. Herstellung von Formteilen:

Die Herstellung der Formteile erfolgte im RIM-Verfahren in einem beheizbaren Formträger. Dazu wurden die verschiedenen Komponenten in einer Gießmaschine der Firma Tartler, Michelstadt angesetzt. Die Gießanlage bestand aus drei Behältern mit einem jeweiligen Volumen von 20 Litern, die jeweils mit einer Pumpe mit einer Förderleistung von 40-400 ccm/min ausgestattet waren. Nach der RIM-Technologie wurden in einem dynamischen Mischer (Mischtemperatur: 122°C) mit 6000 U/min die verschiedenen Komponenten im Verhältnis 1:1 gemischt. Die Mischung wurde in eine geschlossene, auf 155°C beheizte und mit 8 Lagen Fasern (Schlichte FK801, Glasfilamentgewebe: Flächengewicht 280,0 g/m² ± 5% bestimmt nach DIN EN 12127, Kettgarn EC9-68x3 t0, Schussgarn EC9-204, Fadendichte, Kette 7,0 Fd / cm ± 5%, Schuss 6,5 Fd / cm ± 5% bestimmt nach DIN EN 1049, Feuchtigkeitsgehalt kleiner 0,1% ± 1% bestimmt nach DIN EN 3616, Dicke (Richtwert trocken), 0,35 mm ± 5% bestimmt nach DIN ISO 4603/E) gefüllte Form eingetragen. Diese Form hatte eine Abmessung von 340x340x4 mm und ein Volumen von 360 cm³. Nach 10 min Reaktion in der Form wurde das fertige Formteil entnommen. Die Ergebnisse sind in Tabelle 2 aufgeführt. Die folgenden Beispiele erläutern die Versuchsdurchführung im Detail.

**Tabelle 2:**

| Beispiel | Vergl. 8 | Vergl. 9 | Vergl. 10 | 4 (Vergl.) | 5 (Vergl.) | 6 (Vergl.) | 7 | Vergl. 11 | Vergl. 12 |
|---|---|---|---|---|---|---|---|---|---|
| Lactam (Gew.-%) | 94 | 88 | 82 | 89 | 84 | 87 | 84 | 89 | 84 |
| Styrolbutadien-Copolymer | - | - | - | - | - | - | 8 | - | - |
| PBu LBR-307 (Gew.-%) | - | - | - | 4 | 8 | 16 | - | 5 | 10 |
| PBudiOH Poly BD R-45 HTLO (Gew.-%) | - | 5 | 10 | 1 | 2 | 4 | 2 | - | - |
| Katalysator C10 (Gew.-%) | 4 | 4 | 4 | 4 | 4 | 4 | 4 | 4 | 4 |
| Aktivator C20 (Gew.-%) | 2 | 3 | 4 | 2 | 2 | 2 | 2 | 2 | 2 |
| Stoffmenge PBu (mmol) | - | - | - | 0,05 | 0,1 | 0,2 | - | 0,063 | 0,125 |
| Stoffmenge PBudiOH (mmol) | - | 0,179 | 0,357 | 0,036 | 0,071 | 0,143 | - | - | - |
| Verhältnis PBu/PBudiOH | - | - | - | 1,39 | 1,41 | 1,40 | - | - | - |
| DST (J) | 37 | 35 | 39 | 53 | 53 | 55 | 57 | 45 | 49 |
| VZ (g/ml) * | 507 | 359 | 266 | 439 | 479 | 417 | 440 | 486 | 447 |

| | | | | | | | | | |
|---|---|---|---|---|---|---|---|---|---|
| * Die VZ wird am Formteil gemessen, d.h. aus dem Formteil werden kleine Stücke herausgeschnitten und dann der VZ-Analyse unterzogen. Die Glasfaser wird vor der Messung abgetrennt (Methode siehe oben). | | | | | | | | | |

Vergleichsbeispiele 9, 10 analog zu EP 243 177
Vergleichsbeispiele 11, 12 analog zu DE 3 534 949

### Vergleichsbeispiel 8: Herstellung eines Formteils

Zusammensetzung des A-Behälters:
4 Gew.-% Brueggolen C10
47 Gew.-% Caprolactam

Zusammensetzung des B-Behälters:
2 Gew.-% Brueggolen C20
47 Gew.-% Caprolactam
0.2 Gew.-% Calciumstearat

Der Aktivator Brüggolen C20 (80% Caprolactam-blockiertes 1,6-Hexamethylendiisocyanat in Caprolactam, Brüggemann KG, Heilbronn) und der Katalysators Brüggolen C10 (18% Natriumcaprolactam in Caprolactam, Brüggemann KG, Heilbronn) wurden als Feststoffe den frischen Caprolactamschmelzen bei 112°C in den Behältern A und B unter Rühren und unter N₂-Atmosphäre zugefügt. Dem B-Behälter wird außerdem noch 0.2% Calciumstearat als internes Entformungsmittel beigegeben. Anschließend wurden die beiden Mischungen im Verhältnis 1:1 in den geschlossenen, auf 155°C beheizten und mit 8 Lagen Fasern (Schlichte FK801, Glasfilamentgewebe: Flächengewicht 280,0 g/m² ± 5% bestimmt nach DIN EN 12127, Kettgarn EC9-68x3 t0, Schussgarn EC9-204, Fadendichte, Kette 7,0 Fd / cm ± 5%, Schuss 6,5 Fd / cm ± 5% bestimmt nach DIN EN 1049, Feuchtigkeitsgehalt kleiner 0,1% ± 1% bestimmt nach DIN EN 3616, Dicke (Richtwert trocken), 0,35 mm ± 5% bestimmt nach DIN ISO 4603/E) gefüllten Formträger einspritzt. Nach 10 min bei 155°C in der Form wurde das fertige Formteil ohne Entformungsprobleme entnommen. Bei 999 von 1000 Versuchen ließ sich das Formteil problemlos aus der Form herauslösen. Es wurde ein Formteil mit glatter Oberfläche und ohne Verfärbungen erhalten. Die Viskositätszahl betrug 507.

### Vergleichsbeispiel 9: Herstellung Formteils mit 5% PBudiOH

Zusammensetzung des A-Behälters:
4 Gew.-% Brüggolen C10
44 Gew.-% Caprolactam

Zusammensetzung des B-Behälters:
3 Gew.-% Brüggolen C20
5 Gew.-% OH-terminiertes Polybutadien
44 Gew.-% Caprolactam
0.2 Gew.-% Calciumstearat

Der Aktivator Brüggolen C20 (80% Caprolactam-blockiertes 1,6-Hexamethylendiisocyanat in Caprolactam, Brüggemann KG, Heilbronn) und der Katalysators Brüggolen C10 (18% Natriumcaprolactam in Caprolactam, Brüggemann KG, Heilbronn) wurden als Feststoffe den frischen Caprolactamschmelzen bei 112°C in den Behältern A und B unter Rühren und unter N₂-Atmosphäre zugefügt. Dem B-Behälter wurde außerdem noch 0.2% Calciumstearat als internes Entformungsmittel beigegeben. Anschließend wurden das OH-terminierte Polybutadien in den Behälter B zugegeben und innerhalb von 15 min gelöst. Daraufhin wurden die beiden Mischungen im Verhältnis 1:1 in den geschlossenen, auf 155°C beheizten und mit 8 Lagen Fasern (Schlichte FK801, Glasfilamentgewebe: Flächengewicht 280,0 g/m² ± 5% bestimmt nach DIN EN 12127, Kettgarn EC9-68x3 t0, Schussgarn EC9-204, Fadendichte, Kette 7,0 Fd / cm ± 5%, Schuss 6,5 Fd / cm ± 5% bestimmt nach DIN EN 1049, Feuchtigkeitsgehalt kleiner 0,1% ± 1 % bestimmt nach DIN EN 3616, Dicke (Richtwert trocken), 0,35 mm ± 5% bestimmt nach DIN ISO 4603/E) gefüllten Formträger einspritzt. Nach 10 min bei 155°C in der Form wurde das fertige Formteil ohne Entformungsprobleme entnommen (bei Konzentrationen von 10% OH-terminiertes Polybutadien ist eine Entformung bei 9 von 100 Teilen ohne Probleme möglich). Es wurde ein Formteil mit glatter Oberfläche erhalten. Die VZ lag bei 359.

### Vergleichsbeispiel 10: Herstellung eines Polyamidformkörpers mit 10% OH-terminiertem Polybutadien

Vergleichsbeispiel I wurde wiederholt mit dem Unterschied, dass 10% OH-terminiertes Polybutadien eingesetzt wurde. Es wurde ein Formteil mit glatter Oberfläche erhalten (bei Konzentrationen von 10% OH-terminiertem Polybutadien ist eine Entformung bei 9 von 100 Teilen ohne Probleme möglich). Die VZ lag bei 266.

### Beispiel 4 (Vergleich): Herstellung eines Formteils mit 4% PBu und 1 % PBudiOH

Zusammensetzung des A-Behälters:
4 Gew.-% Brüggolen C10
2 Gew.-% nicht funktionalisiertes Polybutadien
44.5 Gew.-% Caprolactam

Zusammensetzung des B-Behälters:
2 Gew.-% Brüggolen C20
2 Gew.-% nicht funktionalisiertes Polybutadien
1 Gew.-% OH-terminiertes Polybutadien
44.5 Gew.-% Caprolactam
0.2 Gew.-% Calciumstearat

Der Aktivator Brüggolen C20 (80% Caprolactam-blockiertes 1,6-Hexamethylendiisocyanat in Caprolactam, Brüggemann KG, Heilbronn) wurde Behälter B zugeführt. Der Katalysator Brüggolen C10 (18% Natriumcaprolactam in Caprolactam, Brüggemann KG, Heilbronn) wurde dem Behälter A zugeführt. Beiden Behältern A und B wurde eine Caprolactamschmelze bei 112°C unter N₂-Atmosphäre zugefügt. Dem B-Behälter wurde außerdem noch 0.2% Calciumstearat als internes Entformungsmittel beigegeben. Anschließend wurden der Hydroxy-terminierte Kautschuk Behälter A und der nicht-funktionalisierte Kautschuk Behälter B zugegeben und innerhalb von 15 min gelöst. Daraufhin wurden die beiden Mischungen im Verhältnis 1:1 in den geschlossenen, auf 155°C beheizten und mit 8 Lagen Fasern (Schlichte FK801, Glasfilamentgewebe: Flächengewicht 280,0 g/m² ± 5% bestimmt nach DIN EN 12127, Kettgarn EC9-68x3 t0, Schussgarn EC9-204, Fadendichte, Kette 7,0 Fd / cm ± 5%, Schuss 6,5 Fd / cm ± 5% bestimmt nach DIN EN 1049, Feuchtigkeitsgehalt kleiner 0,1% ± 1% bestimmt nach DIN EN 3616, Dicke (Richtwert trocken), 0,35 mm ± 5% bestimmt nach DIN ISO 4603/E) gefüllten Formträger einspritzt. Nach 10 min bei 155°C in der Form wurde das fertige Formteil ohne Entformungsprobleme entnommen. Es wurde ein Formteil mit glatter Oberfläche und ohne Verfärbungen erhalten. Bei Verwendung von 4 Gew.-% an nicht funktionalisiertem Polybutadien ist bei 9 von 10 Teilen das problemlose Herauslösen aus einer Form nicht möglich. Die VZ betrug 439.

Beispiel 5 (Vergleich): Herstellung eines Formteils mit 8% nicht funktionalisiertes Polybutadien und 2% OH-terminiertes Polybutadien. Beispiel 4 wurde wiederholt mit dem Unterschied, dass 8% nicht funktionalisiertes Polybutadien und 2% OH-terminiertes Polybutadien eingesetzt wurde. Es wurde ein Formteil mit glatter Oberfläche und ohne Verfärbungen erhalten. Bei Verwendung von 8% an nicht funktionalisiertem Polybutadien ist bei 9 von 10 Teilen das problemlose Herauslösen aus einer Form nicht mehr möglich. Die VZ betrug 479.

Beispiel 6 (Vergleich): Herstellung eines Formteils mit 16% nicht funktionalisiertem Polybutadien und 4% OH-terminiertem Polybutadien
Beispiel 4 wurde wiederholt mit dem Unterschied, dass 16% nicht funktionalisiertes Polybutadien und 4% Hydroxy-terminiertes Polybutadien eingesetzt wurde. Es wurde ein Formteil mit glatter Oberfläche und ohne Verfärbungen erhalten. Die VZ betrug 417.
Bei Verwendung von 16% an nicht funktionalisiertem Polybutadien war bei 99 von 100 Teilen das problemlose Herauslösen aus einer Form nicht mehr möglich.

### Vergleichsbeispiel 11: Herstellung eines Formteils mit 5% nicht funktionalisiertem Polybutadien

Zusammensetzung des A-Behälters:
4 Gew.-% Brüggolen C10
2,5 Gew.-% nicht funktionalisiertes Polybutadien
44.5 Gew.-% Caprolactam

Zusammensetzung des B-Behälters:
2 Gew.-% Brüggolen C20
2,5 Gew.-% nicht funktionalisiertes Polybutadien
44.5 Gew.-% Caprolactam
0.2 Gew.-% Calciumstearat

Der Aktivator Brüggolen C20 (80% Caprolactam-blockiertes 1,6-Hexamethylendiisocyanat in Caprolactam, Brüggemann KG, Heilbronn) wurde einem Behälte B zugefügt. Der Katalysators Brüggolen C10 (18% Natriumcaprolactam in Caprolactam, Brüggemann KG, Heilbronn) einem Behälter A zugefügt. Beiden Behältern wurde eine Caprolactamschmelze bei 112°C unter Rühren und unter N₂-Atmosphäre zugefügt. Dem B-Behälter wurde außerdem noch 0.2% Calciumstearat als internes Entformungsmittel beigegeben. Anschließend wurde nicht funktionalisiertes Polybutadien in die Behälter A und B zugegeben und innerhalb von 15 min gelöst. Daraufhin wurden die beiden Mischungen im Verhältnis 1:1 in den geschlossenen, auf 155°C beheizten und mit 8 Lagen Fasern (Schlichte FK801, Glasfilamentgewebe: Flächengewicht 280,0 g/m² ± 5% bestimmt nach DIN EN 12127, Kettgarn EC9-68x3 t0, Schussgarn EC9-204, Fadendichte, Kette 7,0 Fd / cm ± 5%, Schuss 6,5 Fd / cm ± 5% bestimmt nach DIN EN 1049, Feuchtigkeitsgehalt kleiner 0,1% ± 1 % bestimmt nach DIN EN 3616, Dicke (Richtwert trocken), 0,35 mm ± 5% bestimmt nach DIN ISO 4603/E) gefüllten Formträger einspritzt. Nach 10 min bei 155°C in der Form wurde das fertige Formteil mit Problemen der Form entnommen. Es wurde ein Formteil mit partiell klebriger Oberfläche erhalten. Die VZ ist betrug 486.

### Vergleichsbeispiel 12: Herstellung eines Formteils mit 10% nicht funktionalisiertem Polybutadien

Das Vergleichsbeispiel wurde wiederholt mit dem Unterschied, dass 10% nicht funktionalisiertes Polybutadien verwendet wurde. Das Formteil klebte stark in der Form und ließ sich sehr schlecht entformen. Die Oberfläche war aufgeraut und stark klebrig. Die VZ betrug 447.

### Beispiel 7: Herstellung eines Formteils mit 8 Gew.-% eines statistischen Styrolbutadien-Copolymers und 2 Gew.-% hydroxy-terminiertes Polybutadien

Zusammensetzung des A-Behälters:
4 Gew.-% Brüggolen C10
4 Gew.-% statistisches Stryolbutadien-Copolymer
42 Gew.-% Caprolactam

Zusammensetzung des B-Behälters:
2 Gew.-% Brüggolen C20
4 Gew.-% statistisches Stryolbutadien-Copolymer
2 Gew.-% Hydroxy-terminiertes Polybutadien
42 Gew.-% Caprolactam
0.2 Gew.-% Calciumstearat

Der Aktivator Brüggolen C20 (80 Gew.-% Caprolactam-blockiertes 1,6-Hexamethylendiisocyanat in Caprolactam, Brüggemann KG, Heilbronn) und der Katalysators Brüggolen C10 (18 Gew.-% Natriumcaprolactam in Caprolactam, Brüggemann KG, Heilbronn) wurden als Feststoffe den frischen Caprolactamschmelzen bei 112°C in den Behältern A und B unter Rühren und unter N₂-Atmosphäre zugefügt. Dem B-Behälter wurde 0.2% Calciumstearat als internes Entformungsmittel beigegeben. Anschließend wurden die Kautschukadditive in die Behälter A und B zugegeben und innerhalb von 15 min gelöst. Daraufhin wurden die beiden Mischungen im Verhältnis 1:1 in den geschlossenen, auf 155°C beheizten und mit 8 Lagen Fasern (Schlichte FK801, Glasfilamentgewebe: Flächengewicht 280,0 g/m² ± 5% bestimmt nach DIN EN 12127, Kettgarn EC9-68x3 t0, Schussgarn EC9-204, Fadendichte, Kette 7,0 Fd / cm ± 5%, Schuss 6,5 Fd / cm ± 5% bestimmt nach DIN EN 1049, Feuchtigkeitsgehalt kleiner 0,1% ± 1% bestimmt nach DIN EN 3616, Dicke (Richtwert trocken), 0,35 mm ± 5% bestimmt nach DIN ISO 4603/E) gefüllten Formträger einspritzt. Nach 10 min bei 155°C in der Form wurde das fertige Formteil ohne Entformungsprobleme der Form entnommen. Die VZ betrug 440.

## Patentansprüche

1. Zusammensetzung umfassend die Komponenten
(A) von 50 bis 99,5 Gew.-% mindestens eines Lactams
(B) von 0,1 bis 10 Gew.-% mindestens eines Katalysators
(C) von 0,1 bis 5 Gew.-% eines Aktivators aus der Gruppe der Isocyanate, Säureanhydride, Säurehalogenide, deren Umsetzungsprodukte mit (A) und deren Mischungen
(D) von 0,25 bis 45 Gew.-% mindestens eines nicht funktionalisierten statistischen Styrol-Butadien-Copolymers, das keine funktionellen Gruppen mit Heteroatomen umfasst, und
(E) von 0,05 bis 25 Gew.-% mindestens eines Hydroxy-terminierten Kautschuks,
wobei die Gew.-% Angaben auf die der Komponenten (A) bis (E) bezogen sind und diese Summe 100 Gew.-% beträgt.

2. Zusammensetzung nach Anspruch 1 wobei Komponente (D) ein gewichtsgemitteltes Molekulargewicht von 500 bis 300.000 g/mol aufweist, bestimmt aus GPC mit Lichtstreuung in Hexafluorisopropanol (HFIP) bei 40°C.

3. Zusammensetzung nach Anspruch 1 oder 2 wobei Komponente (D) einen Tg-Wert von -150°C bis 25 °C aufweist, bestimmt unter Stickstoff-Schutzgas durch Differential Scanning Calorimetry (DSC) mit einer Starttemperatur von -180 °C, einer Endtemperatur von 200 °C und einer Heizrate von 20 [K/min].

4. Zusammensetzung nach mindestens einem der Ansprüche 1 bis 3 wobei der Hydroxy-terminierte Kautschuk (E) ein mittels Lichtstreuung bestimmtes gewichtsgemitteltes Molekulargewicht von 500 bis 60.000 g/mol aufweist.

5. Zusammensetzung nach mindestens einem der Ansprüche 1 bis 4, wobei Komponente (E) mindestens einen Hydroxy-terminierten Polybutadien Kautschuk umfasst.

6. Zusammensetzung nach mindestens einem der Ansprüche 1 bis 5 wobei das Stoffmengen-Verhältnis von Komponente (D) zu Komponente (E) von 1 zu 10 bis 10 zu 1 beträgt.

7. Verfahren **dadurch gekennzeichnet, dass** die Zusammensetzung nach mindestens einem der Ansprüche 1 bis 6 einer Temperatur im Bereich von 40 bis 240°C ausgesetzt wird unter Erhalt einer polymeren festen Phase.

8. Verfahren **dadurch gekennzeichnet, dass** in der Zusammensetzung nach mindestens einem der Ansprüche 1 bis 6 die Komponenten (A), (D) und (E) bei einer Temperatur im Bereich von 40 bis 240°C gelöst werden, anschließend (C) hinzugefügt wird, wobei ein Präpolymer gebildet wird, das in Folge bei einer Temperatur im Bereich von 10 bis 120 °C mit der Komponente (B) unter Erhalt einer polymeren festen Phase umgesetzt wird.

9. Verfahren zur Herstellung eines Formteils umfassend
(a) das Herstellen getrennter Mischungen
s1) enthaltend mindestens ein Lactam (A), von 0,1 bis 5 Gew.-% eines Aktivators (C) aus der Gruppe der Isocyanate, Säureanhydride, Säurehalogenide, deren Umsetzungsprodukte mit (A) und deren Mischungen, von 0,05 bis 25 Gew.-% mindestens eines Hydroxy-terminierten Kautschuks (E)
s2) enthaltend mindestens ein Lactam (A) und von 0,1 bis 10 Gew.-% mindestens eines Katalysators (B) und von 0,25 bis 45 Gew.-% mindestens eines nicht funktionalisierten statistischen Styrol-Butadien-Copolymers (D), das keine funktionellen Gruppen mit Heteroatomen umfasst, wobei die Gesamtmenge an Komponente (A) in den Mischungen s1) und s2) 50 bis 99,5 Gew.-% beträgt und wobei die Gew.-% Angaben auf die der Komponenten (A) bis (E) bezogen sind und diese Summe 100 Gew.-% beträgt,
(b) Einspritzen der vereinigten Mischungen s1) und s2) in eine heiße Form mit eingelegter textiler Struktur und
(c) Auswerfen des resultierenden Formteils aus der Form.

10. Verfahren zur Herstellung eines Formteils umfassend
(a) das Herstellen getrennter Mischungen
s1) enthaltend mindestens ein Lactam (A), von 0,1 bis 5 Gew.-% eines Aktivators (C) aus der Gruppe der Isocyanate, Säureanhydride, Säurehalogenide, deren Umsetzungsprodukte mit (A) und deren Mischungen, von 0,05 bis 25 Gew.-% mindestens eines Hydroxy-terminierten Kautschuks (E) und mindestens ein nicht funktionalisiertes statistisches Styrol-Butadien-Copolymer (D), das keine funktionellen Gruppen mit Heteroatomen umfasst,
s2) enthaltend mindestens ein Lactam (A) und von 0,1 bis 10 Gew.-% mindestens eines Katalysators (B) und mindestens ein nicht funktionalisiertes statistisches Styrol-Butadien-Copolymer (D), das keine funktionellen Gruppen mit Heteroatomen umfasst, wobei die Gesamtmenge an Komponente (A) in den Mischungen s1) und s2) 50 bis 99,5 Gew.-% und die Gesamtmenge an Komponente (D) in den Mischungen s1) und s2) 0,25 bis 45 Gew.-% beträgt und wobei die Gew.-% Angaben auf die der Komponenten (A) bis (E) bezogen sind und diese Summe 100 Gew.-% beträgt,
(b) Einspritzen der vereinigten Mischungen s1) und s2) in eine heiße Form mit eingelegter textiler Struktur und
(c) Auswerfen des resultierenden Formteils aus der Form.

11. Verfahren gemäß Anspruch 9 oder 10 wobei die textile Struktur Gewebe, Gewirke, Gestricke, Gelege oder Vliese aus Glas-, Carbon- und/oder AramidFasern sind.

12. Formteil erhältlich gemäß einem der Ansprüche 9, 10 oder 11.

13. Formteil gemäß Anspruch 12, wobei zum Durchstoßen des Formteils nach Durchstoßtest ISO6603 eine Durchstoßarbeit von 50 bis 65 J nötig ist, gemessen an einem quadratischen Formteil von 60 mm mal 60 mm Abmessung, bei einer Temperatur von 23°C und einer Luftfeuchte von 50% mit einem Fallgewicht, dessen Auftreffgeschwindigkeit 4,2 m/s betrug und dessen Masse 43 kg betrug.

## Claims

1. Composition comprising the following components:
(A) from 50 to 99.5% by weight of at least one lactam
(B) from 0.1 to 10% by weight of at least one catalyst
(C) from 0.1 to 5% by weight of an activator from the group of the isocyanates, anhydrides, acyl halides, reaction products of these with (A), and mixtures of these
(D) from 0.25 to 45% by weight of at least one non-functionalized random styrene-butadiene copolymer which comprises no functional groups having heteroatoms, and
(E)from 0.05 to 25% by weight of at least one hydroxy-terminated rubber,
where the % by weight data are based on components (A) to (E) and the total here is 100% by weight.

2. Composition according to Claim 1, where the weight-average molar mass of non-functionalized rubber (D) is from 500 to 300 000 g/mol, determined from GPC with light scattering in hexafluoroisopropanol (HFIP) at 40°C.

3. Composition according to Claim 1, where the Tg value of component (D) is from -150°C to 25°C, determined under nitrogen as inert gas by Differential Scanning Calorimetry (DSC) with a start temperature of -180°C, an end temperature of 200°C, and a heating rate of 20 [K/min].

4. Composition according to at least one of Claims 1 to 3, where the weight-average molar mass determined by means of light scattering for the hydroxy-terminated rubber (E) is from 500 to 60 000 g/mol.

5. Composition according to at least one of Claims 1 to 4, where component (E) comprises at least one hydroxyl-terminated polybutadiene rubber.

6. Composition according to at least one of Claims 1 to 5, where the molar ratio of component (D) to component (E) is from 1:10 to 10:1.

7. Process which comprises exposing the composition according to at least one of Claims 1 to 6 to a temperature in the range from 40 to 240°C to obtain a solid polymeric phase.

8. Process which comprises dissolving components (A), (D) and (E) in the composition according to at least one of Claims 1 to 6 at a temperature in the range from 40 to 240°C, then adding (C), whereupon a prepolymer is formed, which subsequently is reacted with component (B) at a temperature in the range from 10 to 120°C to obtain a solid polymeric phase.

9. Process for producing a molding comprising
(a) producing separate mixtures
s1) comprising at least one lactam (A), from 0.1 to 5% by weight of an activator (C) from the group of the isocyanates, anhydrides, acyl halides, reaction products of these with (A), and mixtures of these, from 0.05 to 25% by weight of at least, and one hydroxy-terminated rubber (E)
s2) comprising at least one lactam (A) and from 0.1 to 10% by weight of at least one catalyst (B) and from 0.25 to 45% by weight of at least one non-functionalized random styrene-butadiene copolymer (D) which comprises no functional groups having heteroatoms, where the total amount of component (A) in the mixtures s1) and s2) is 50 to 99.5% by weight and where the % by weight data are based on components (A) to (E) and the total here is 100% by weight,
(b) injecting the combined mixtures s1) and s2) into a hot mold with inserted textile structure and
(c) ejecting the resultant molding from the mold.

10. Process for producing a molding comprising
(a) producing separate mixtures
s1) comprising at least one lactam (A), from 0.1 to 5% by weight of an activator (C) from the group of the isocyanates, anhydrides, acyl halides, reaction products of these with (A), and mixtures of these, from 0.05 to 25% by weight of at least one hydroxy-terminated rubber (E), and at least one non-functionalized random styrene-butadiene copolymer (D), which does not comprise any functional groups with heteroatoms,
s2) comprising at least one lactam (A) and at from 0.1 to 10% by weight of at least one catalyst (B) and at least one non-functionalized random styrene-butadiene copolymer (D) which comprises no functional groups having heteroatoms, where the total amount of component (A) in the mixtures s1) and s2) is 50 to 99.5% by weight and the total amount of component (D) in the mixtures s1) and s2) is 0.25 to 45% by weight and where the % by weight data are based on components (A) to (E) and the total here is 100% by weight,
(b) injecting the combined mixtures s1) and s2) into a hot mold with inserted textile structure and
(c) ejecting the resultant molding from the mold.

11. Process according to Claim 9 or 10, where the textile structures are wovens, knits, laid scrims, or nonwovens made of glass fibers, of carbon fibers, and/or of aramid fibers.

12. Molding obtainable according to Claim 9, 10 or 11.

13. Molding according to Claim 12, where the penetration energy needed to puncture the molding in accordance with the ISO6603 puncture test is from 50 to 65 J, measured on a square molding measuring 60 mm × 60 mm, at a temperature of 23°C and at 50% humidity, using a falling weight with impact velocity 4.2 m/s and mass 43 kg.

## Revendications

1. Composition comprenant les composants suivants :
(A) de 50 à 99,5 % en poids d'au moins un lactame,
(B) de 0,1 à 10 % en poids d'au moins un catalyseur,
(C) de 0,1 à 5 % en poids d'un activateur du groupe constitué par les isocyanates, les anhydrides d'acides, les halogénures d'acides, leurs produits de réaction avec (A) et leurs mélanges,
(D) de 0,25 à 45 % en poids d'au moins un copolymère de styrène-butadiène statistique non fonctionnalisé, qui ne comprend pas de groupes fonctionnels contenant des hétéroatomes, et
(E) de 0,05 à 25 % en poids d'au moins un caoutchouc à terminaison hydroxy,
les données de % en poids se rapportant aux composants (A) à (E) et cette somme étant de 100 % en poids.

2. Composition selon la revendication 1, dans laquelle le composant (D) présente un poids moléculaire moyen en poids de 500 à 300 000 g/mol, déterminé par CPG avec diffusion de lumière dans de l'hexafluoroisopropanol (HFIP) à 40 °C.

3. Composition selon la revendication 1 ou 2, dans laquelle le composant (D) présente une valeur de Tg de - 150 °C à 25 °C, déterminée sous un gaz protecteur d'azote par calorimétrie à balayage différentiel (DSC) avec une température initiale de -180 °C, une température finale de 200 °C et un taux de chauffe de 20 [K/min].

4. Composition selon au moins l'une quelconque des revendications 1 à 3, dans laquelle le caoutchouc à terminaison hydroxy (E) présente un poids moléculaire moyen en poids déterminé par diffusion de lumière de 500 à 60 000 g/mol.

5. Composition selon au moins l'une quelconque des revendications 1 à 4, dans laquelle le composant (E) comprend au moins un caoutchouc de polybutadiène à terminaison hydroxy.

6. Composition selon au moins l'une quelconque des revendications 1 à 5, dans laquelle le rapport entre les quantités de matière du composant (D) et du composant (E) est de 1 sur 10 à 10 sur 1.

7. Procédé, **caractérisé en ce que** la composition selon au moins l'une quelconque des revendications 1 à 6 est exposée à une température dans la plage allant de 40 à 240 °C pour obtenir une phase polymère solide.

8. Procédé, **caractérisé en ce que** les composants (A), (D) et (E) sont dissous dans la composition selon au moins l'une quelconque des revendications 1 à 6 à une température dans la plage allant de 40 à 240 °C, puis (C) est ajouté, un prépolymère étant formé, qui est ensuite mis en réaction à une température dans la plage allant de 10 à 120 °C avec le composant (B) pour obtenir une phase polymère solide.

9. Procédé de fabrication d'une pièce moulée, comprenant :
(a) la fabrication de mélanges séparés
s1) contenant au moins un lactame (A), de 0,1 à 5 % en poids d'un activateur (C) du groupe constitué par les isocyanates, les anhydrides d'acides, les halogénures d'acides, leurs produits de réaction avec (A) et leurs mélanges, de 0,05 à 25 % en poids d'au moins un caoutchouc à terminaison hydroxy (E),
s2) contenant au moins un lactame (A) et de 0,1 à 10 % en poids d'au moins un catalyseur (B) et de 0,25 à 45 % en poids d'au moins un copolymère de styrène-butadiène statistique non fonctionnalisé (D) qui ne comprend pas de groupes fonctionnels contenant des hétéroatomes, la quantité totale du composant (A) dans les mélanges s1) et s2) étant de 50 à 99,5 % en poids et les données de % en poids se rapportant aux composants (A) à (E) et cette somme étant de 100 % en poids,
(b) l'injection des mélanges s1) et s2) réunis dans un moule chaud contenant une structure textile, et
(c) l'extraction de la pièce moulée résultante du moule.

10. Procédé de fabrication d'une pièce moulée, comprenant :
(a) la fabrication de mélanges séparés
s1) contenant au moins un lactame (A), de 0,1 à 5 % en poids d'un activateur (C) du groupe constitué par les isocyanates, les anhydrides d'acides, les halogénures d'acides, leurs produits de réaction avec (A) et leurs mélanges, de 0,05 à 25 % en poids d'au moins un caoutchouc à terminaison hydroxy (E), et au moins un copolymère de styrène-butadiène statistique non fonctionnalisé (D) qui ne comprend pas de groupes fonctionnels contenant des hétéroatomes,
s2) contenant au moins un lactame (A) et de 0,1 à 10 % en poids d'au moins un catalyseur (B) et au moins un copolymère de styrène-butadiène statistique non fonctionnalisé (D) qui ne comprend pas de groupes fonctionnels contenant des hétéroatomes, la quantité totale du composant (A) dans les mélanges s1) et s2) étant de 50 à 99,5 % en poids et la quantité totale du composant (D) dans les mélanges s1) et s2) étant de 0,25 à 45 % en poids, et les données de % en poids se rapportant aux composants (A) à (E) et cette somme étant de 100 % en poids,
(b) l'injection des mélanges s1) et s2) réunis dans un moule chaud contenant une structure textile, et
(c) l'extraction de la pièce moulée résultante du moule.

11. Procédé selon la revendication 9 ou 10, dans lequel la structure textile est un tissu, un tricot, une nappe ou un non-tissé en fibres de verre, de carbone et/ou d'aramide.

12. Pièce moulée pouvant être obtenue selon l'une quelconque des revendications 9, 10 ou 11.

13. Pièce moulée selon la revendication 12, dans laquelle, pour le transpercement de la pièce moulée selon le test de transpercement ISO 6603, un travail de transpercement de 50 à 65 J est nécessaire, mesuré sur une pièce moulée carrée de dimensions 60 mm x 60 mm, à une température de 23 °C et une humidité de l'air de 50 % avec une masse tombante dont la vitesse à l'impact est de 4,2 m/s et dont la masse est de 43 kg.
